# EUROPÄISCHE PATENTSCHRIFT

(11) **EP 1 213 307 B1**
(45) Veröffentlichungstag und Bekanntmachung des Hinweises auf die Patenterteilung: **19.04.2006**
(21) Anmeldenummer: 01127420.6
(22) Anmeldetag: 26.11.2001
(51) Int. Cl.: C08G 18/08, C08G 18/28, C08G 18/32, C08G 18/42

(54) **Kontinuierliches Verfahren zur Herstellung von thermoplastisch verarbeitbaren Polyurethanelastomeren mit hoher Thermostabilität und konstanter Viskosität**
Continuous process for preparing thermoplastically processable polyurethane elastomers with high thermostability and constant viscosity
Procédé continu de préparation d'élastomères de polyuréthane à thermostabilité élevée et à viscosité constante

(30) Priorität: 08.12.2000 DE 10061067
(43) Veröffentlichungstag der Anmeldung: 12.06.2002
(73) Patentinhaber: Bayer MaterialScience AG, 51368 Leverkusen (DE)
(72) Erfinder: Müller, Friedemann, Dr., 41470 Neuss (DE); Bräuer, Wolfgang, Dr., 51375 Leverkusen (DE); Hoppe, Hans-Georg, 42799 Leichlingen (DE); Wussow, Hans-Georg, Dr., 40597 Düsseldorf (DE); Wagner, Hans, Dr., 41539 Dormagen (DE)

(56) Entgegenhaltungen:
- DE-A- 3 132 760
- US-A- 4 098 772
- PATENT ABSTRACTS OF JAPAN vol. 017, no. 659 (C-1137), 7. Dezember 1993 (1993-12-07) & JP 05 214062 A (TOYOBO CO LTD), 24. August 1993 (1993-08-24)

## Beschreibung

Die Erfindung betrifft ein kontinuierliches Verfahren zur Herstellung von thermoplastisch verarbeitbaren Polyurethanelastomeren mit definiertem (vorher bestimmtem) und standardisiertem (konstantem) Schmelze-Fließ-Verhalten und hoher Thermostabilität durch Einstellung einer definierten Schmelzviskosität mittels Isocyanatvariation und anschließender Zugabe von H-aciden Verbindungen.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester oder Polyether, organischen Diisocyanaten und kurzkettigen Diolen (Kettenverlängerer) aufgebaut. Dabei kann, wie bei allen Polyurethanelastomeren, der Aufbau entweder schrittweise (Prepolymerverfahren) oder durch die gleichzeitige Reaktion aller Komponenten in einer Stufe erfolgen (one shot). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Dieses Verfahren erlaubt eine bessere Reaktionskontrolle und Phasenseparierung als das one shot-Verfahren.

Die TPU's können kontinuierlich oder diskontinuierlich hergestellt werden. Als die bekanntesten technischen Herstellverfahren werden das sogenannte Bandverfahren und das Extruderverfahren genutzt.

Die thermoplastische Verarbeitbarkeit stellt gegenüber den früher bekannten Verarbeitungsmethoden durch Gießen einen großen technischen Fortschritt dar. Schwierigkeiten bereiten jedoch bis heute die Herstellung von großen Formkörpern mit komplizierten Konturen oder von Formkörpern mit geringer Wanddicke, da die hohe Viskosität und begrenzte Fließfähigkeit der Polyurethanschmelze die vollständige Ausfüllung der Form behindert. Zudem verträgt die spezielle Verarbeitung durch Extrusion eine äußerst geringe Toleranz in der Schmelzviskosität. Es wurde daher versucht, durch Steigerung der Verarbeitungstemperaturen eine niedrige Viskosität des Thermoplasten zu erreichen. Dieses führte jedoch zu Verbrennungs- oder Zersetzungserscheinungen des Materials, die sich in Blasen, Schrumpf, Schlieren oder Klebrigkeit bemerkbar machen.

Einen Fortschritt stellten die Verfahren dar, die durch Zugabe von sogenannten Kettenabbrechem, wie z.B. monofunktionellen Alkoholen, die Schmelzviskosität (US 4 071 505, DOS 24 18 075) bzw. den Gelanteil (US 3 718 622) vermindern. Nachteilig an diesen Verfahren ist zum einen, dass damit in der betrieblichen Praxis keine reproduzierbar definierte Viskosität eingestellt werden kann. Geringe Mengen dieser Kettenabbrecher haben nämlich eine erhebliche Wirkung auf die Viskosität. Da die betrieblichen Rohstoffe (z.B. Polyole; unterschiedliche Polyol-Qualitätspartien werden eingesetzt) aber eine nicht konstante Menge an reaktiven Verunreinigungen enthalten, erhält man nach obigen Vorschriften bei gleicher Rezeptur, mit jeweiliger konstanter Kettenabbrechermenge durch unterschiedliche Polymerumsätze immer wieder andere Viskositäten, die die Toleranzgrenzen der Verarbeitung überschreiten.

Zudem erhält man bei der Polyurethanherstellung im Bereich des NCO/OH-Verhältnisses von ungefähr 1 eine bestimmte Viskosität immer bei mindestens zwei verschiedenen Isocyanatkonzentrationen. Die Schmelzviskosität bei der höheren Isocyanatkonzentration (Isocyanatüberschuss) wird erreicht durch einen Anteil von linearem Polyurethan und einem Anteil von vernetztem Polyurethan. Diese Schmelzviskosität ist aufgrund der Vernetzungen, die teilweise nicht thermostabil sind, für die oben geschilderte schwierige Verarbeitung nicht geeignet. Anzustreben ist die nur auf dem linearen Polyurethan basierende Schmelzviskosität, die bei der niedrigeren Isocyanatdosierung erhalten wird.

In US 4 098 772 wird ein Verfahren zur Herstellung thermoplastischer Polyurethan-elastomere mit verbesserten Eigenschaften (erniedrigte Prozesstemperatur, verbesserte Extrudierbarkeit und Stabilität gegen Hydrolyse und Scherung) aus Diisocyanaten, Polymerdiolen und zweiwertigen Kettenverlängerern unter Zugabe von 0,0005 bis 0,05 Äquivalenten, bezogen auf ein Äquivalent Isocyanat, eines aliphatischen Monoalkohols beschrieben.

Bei den nach den bisher bekannten Verfahren hergestellten Produkten kann aufgrund der oben genannten wechselnden Rohstoffverunreinigungen zwischen diesen Viskositäten während der kontinuierlichen Herstellung nicht unterschieden werden. Dieses führt zu einer nicht akzeptablen Produktionsunsicherheit.

Es bestand also weiterhin die Aufgabe, nach einem wirtschaftlichen und betriebsgerechten Verfahren zu suchen, mit dem ein thermoplastisch verarbeitbares Polyurethanelastomer mit definiertem und standardisiertem (konstantem) Schmelze-Fließ-Verhalten (konstanter Viskosität) hergestellt werden kann.

Überraschenderweise wurde nun ein kontinuierliches Verfahren zur Herstellung von thermoplastisch verarbeitbaren Polyurethanelastomeren aus im wesentlichen linearen hydroxylterminierten Polyolen mit einem Molekulargewicht von 600 bis 5 000, organischen Diisocyanaten und Diol- bzw. gegebenenfalls Triol-Kettenverlängerern mit einem Molekulargewicht von 62 bis 500, mit definiertem und standardisiertem (möglichst konstantem) Schmelze-Fließ-Verhalten (konstanter Viskosität) und hoher Thermostabilität gefunden, wobei insgesamt unter Hinzuziehung sämtlicher Reaktionskomponenten ein NCO/OH-Verhältnis von 0,9:1 bis 1,2:1 eingestellt wird, welches dadurch gekennzeichnet ist, dass in der Anfahrphase der kontinuierlichen Herstellung die benötigte Zugabemenge an organischen Diisocyanaten zur Einstellung der max. Viskosität der Schmelze des Polyurethanelastomeren, vorzugsweise gemessen als Druckaufbau vor einer definiert temperierten Kapillare, ermittelt wird, danach die so ermittelte Zugabemenge der organischen Diisocyanate bei der kontinuierlichen Herstellung des Polyurethanelatomeren konstant zugegeben wird und durch zusätzliche und bevorzugte gleichzeitige Zugabe (bevorzugt mit dem Kettenverlängerer) kleinerer Mengen von 0,3 bis 6 Mol-%, bezogen auf den Kettenverlängerer, H-acider Verbindungen, vorzugsweise monofunktioneller H-acider Verbindungen, aus der Gruppe bestehend aus Monoalkoholen und primären und/oder sekundären Aminen, die Viskosität der Schmelze des Polyurethanelastomeren auf einen konstanten Wert von <90 % der vorher ermittelten max. Viskosität eingestellt wird. Die Anfahrphase bedeutet der Beginn des kontinuierlichen Prozesses, währenddessen die Mengen der Zugabeströme bestimmt und angepaßt werden.

Im erfindungsgemäßen Verfahren können bis zu 2 Gew.-% weniger organisches Diisocyanat als in der Anfahrphase ermittelt zugegeben werden, um so thermoplastisch verarbeitbare Polyurethanelastomere mit ganz besonders niedrigen Schmelzviskositäten zu erhalten.

Bevorzugte Polyole sind Polyester, Polyether, Polycarbonate oder ein Gemisch aus diesen.

Geeignete Polyetherole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-A1-kyldiethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Es können auch trifunktionelle Polyetherole in Anteilen von 0 bis 30 Gew.-%, bezogen auf die bifunktionellen Polyetherole eingesetzt werden.

Die im wesentlichen linearen Polyetherole besitzen Molekulargewichte von 600 bis 5 000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure, Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 600 bis 5 000.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, dass ein unvemetztes Produkt entsteht, verwendet werden. Beispiele sind Triphenylmethan-4,4',4"-triisocyanat und Polyphenyl-polymethylen-polyisocyanate.

Als Kettenverlängerungsmittel mit Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethylethylen-diamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane. Es können auch Gemische der oben genannten Kettenverlängerer eingesetzt werden.

Die erfindungsgemäßen H-aciden Verbindungen können beispielsweise Butanol, Hexanol, Octanol, Isooctanol, Nonylalkohol, Dodecylalkohol, Stearylalkohol, Ethylenglykolmonoalkylether wie z.B. Ethylenglykolmonomethylether, Isopropyl-alkohol, Isobutylalkohol, tert.-Pentylalkohol sein. Geeignete primäre und sekundäre Amine sind z.B. Butylamin, Hexylamin, Stearylamin, Dibutylamin und Ethylendiamin.

Zur Herstellung der TPU werden die Aufbaukomponenten, gegebenenfalls in Gegenwart von Katalysatoren, Hilfsmitteln und/oder Zusatzstoffen in solchen Mengen zur Reaktion gebracht werden, dass das Äquivalenzverhältnis von NCO-Gruppen zur Summe aller NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete Katalysatoren, welche insbesondere die Reaktion zwischen den NCO-Gruppen der Diisocyanate und den Hydroxylgruppen der Diol-Komponenten beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctat. Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die oben genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Weitere Zusatzkomponenten, die in das TPU eingearbeitet werden können, sind Thermoplaste, beispielsweise Polycarbonate und Acrylnitrilbutadienstyrolterpolymere, insbesondere ABS. Ebenfalls können andere Elastomere wie z.B. Kautschuk, Ethylenvinylacetatpolymere, Styrolbutadiencopolymere sowie andere TPU's verwendet werden. Weiterhin zur Einarbeitung geeignet sind handelsübliche Weichmacher wie z.B. Phosphate, Phthalate, Adipate, Sebacate.

Die erfindungsgemäßen TPU's werden kontinuierlich hergestellt. Dabei kann sowohl das bekannte Bandverfahren als auch das Extruderverfahren angewendet werden. Die Dosierung der Komponenten kann gleichzeitig, d.h. one shot, oder nacheinander, d.h. nach einem Prepolymer-Verfahren, erfolgen. Dabei kann das Prepolymer sowohl batchweise vorgelegt, als auch kontinuierlich im ersten Teil des Extruders oder in einem separaten vorgeschalteten Prepolymeraggregat hergestellt werden.

Bevorzugt wird das Extruderverfahren, gegebenenfalls in Verbindung mit einem Prepolymerreaktor, angewendet.

Erfindungsgemäß wird bei vorgegebener Rezeptur aus den oben genannten Bestandteilen Polyol, Isocyanat und Kettenverlängerer, aber ohne die zusätzliche H-acide Verbindung, über verschiedene in kleinen Dosierstufen variierte Isocyanatmengen diejenige Isocyanatmenge gesucht, bei der die Schmelzviskosität am größten ist. Diese Dosierstufen können z.B. die theoretisch berechneten NCO/OH-Verhältnisse 0,98, 0,99, 1,00, 1,01, 1,02, 1,03, 1,04 sein, die natürlich die Rohstoffverunreinigungen nicht berücksichtigen.

Die Messung der Schmelzviskosität des TPU's kann auf verschiedenen Wegen erfolgen. Zum einen können diskontinuierlich Schmelzeproben entnommen werden, die nach bekannten Verfahren, wie z.B. Rotationsviskosimeter oder Fließspirale oder MVI-Wert (melt volumen index) nach DIN 53 735, vermessen werden. Eine bevorzugte Methode ist die kontinuierliche Messung des Druckaufbaus der kontinuierlich fließenden Schmelze aus der TPU-Reaktion vor einer definiert beheizten Kapillare, die am Ende des Reaktors (z.B. des Extruders) angebracht ist. In der Kapillare mit einem bestimmten Durchmesser und einer bestimmten Länge wird bei vorgegebener Temperatur der Schmelze der Druck gemessen. Die Messtemperatur in der beheizten Kapillare liegt bevorzugt im Bereich zwischen 150° und 260°C. Der gemessene Schmelze-Druck korreliert mit der Schmelzviskosität MVI nach DIN 53 375.

Die so ermittelte maximale Viskosität hängt bei gleicher Zusammensetzung der Schmelze von den drei vorgenannten Parametern ab. Dessen Höhe ist aber unbeachtlich, da sich stets gleich verlaufende Viskositäts-Kurven gegen das NCO/OH-Verhältnis ergeben. Wichtig ist nur, dass gemäß vorliegendem Verfahren mit gleicher Kapillare bei gleicher Mess-Temperatur gearbeitet wird.

Nach der Ermittlung der maximalen Schmelzviskosität durch Isocyanatvariation wird nun bei dieser Isocyanatmenge (z.B. NCO/OH-Verhältnis 1,01) die Dosierung einer H-aciden Verbindung (z.B. Butanol, Hexanol, Octanol, Stearylalkohol) stufenweise gesteigert, bis die Schmelzviskosität, bevorzugt gemessen als Druckaufbau vor einer Kapillare, auf einen Wert <90 % der maximalen Viskosität absinkt. Dabei beträgt die zugesetzte Menge an H-acider Verbindung üblicherweise zwischen 0,3 bis 6 mol-%, bezogen auf den Kettenverlängerer. Die Menge wird in Abhängigkeit von den unterschiedlichen Rohstoffen (z.B. verschiedene Partien mit unterschiedlichen Polyolqualitäten) und Rohstoffverunreinigungen (z.B. Funktionalitätsabweichungen, Molgewichtsabweichungen, H₂O-Gehalt) variieren.

Die H-acide Verbindung kann getrennt von den anderen Rohstoffen oder auch z.B. in die Kettenverlängererdosierung eingebracht werden.

Mit diesem erfindungsgemäßen Verfahren erreicht man auf sicherem Weg eine definierte niedrige Schmelzviskosität und zwar auf der OH-Seite, die hauptsächlich auf linearem TPU-Molekulargewicht beruht. Eventuell vorhandene Isocyanatüberschüsse, die zu Vemetzungen führen können, werden so "zurücktitriert". Die nach dem erfindungsgemäßen Verfahren hergestellten Produkte sind therrnostabiler als die nach den bekannten Verfahren, und die Homogenität bei der Extrusionsanwendung wird verbessert. Mit dem erfindungsgemäßen Verfahren kann man bei einer technisch üblichen kontinuierlichen Herstellung von TPU so variabel auf Rohstoffschwankungen (z.B. Funktionalitätsschwankungen) reagieren und Produkte mit konstanten Eigenschaften erzeugen.

Die so erhaltenen Produkte besitzen sehr gute mechanische Eigenschaften und eignen sich insbesondere zur Herstellung von komplizierten Spritzgussartikeln, Polyurethanfolien, Kalander- und Powder-slush-artikeln.

Mit den folgenden Beispielen wird das erfindungsgemäße Verfahren verdeutlicht, aber nicht begrenzt.

### Beispiele 1 bis 9

100 Gew.-Teile eines Poly-butandiol-1,4-adipates mit einem Molgewicht von ca. 2 250 (in Form von Partien A, B, C unterschiedlicher Polyolqualität) und 1 Gew.-Teil eines 2,2',6,6'-Tetraisopropyldiphenylcarbpdiimid werden in einem Wärmetauscher auf 130°C gebracht und kontinuierlich mittels einer Zahnradpumpe in das erste Gehäuse eines Zweiwellenkneters (ZSK 120; Fa. Werner/Pfleiderer) dosiert. In das gleiche Gehäuse werden verschiedene Mengen an 60°C heißem Diphenylmethandiisocyanat (MDI-flüssig) und 0,6 Gew.-Teile Bis-ethylen-stearylamid als Pulver dosiert. In Gehäuse 7 pumpt man 11,0 Gew.-Teile auf 60°C erhitztes Butandiol. Die Gesamtdosierung beträgt etwa 1 100 kg/h.

Die Gehäusetemperaturen liegen bei 200°C bis 260°C. Die Drehzahl der ZSK ist auf 300 U/min eingestellt. Das TPU wird als Schmelzstrang extrudiert, im Wasser abgekühlt und granuliert.

In einem am Ende der ZSK abzweigenden Schmelze-Seitenstrom wurden die jeweiligen Schmelzviskositäten über den Druckaufbau vor einer Messkapillare (Länge: 52 mm; Innendurchmesser: 2 mm; Temperatur: 210°C) in bar kontinuierlich gemessen.

Die maximale Schmelzviskosität erreichte man so bei einem NCO/OH-Verhältnis von 1,015.

Nach dieser Eichung dosierte man bei diesem festen NCO/OH-Verhältnis verschiedene steigende Mengen an n-Octanol in den Butandiol-Strom.

Die Ergebnisse der Prüfungen dieser Produkte sind in der Tabelle angegeben. Beispiele 1, 2 und 7 sind die Vergleichsbeispiele bei maximaler Schmelzviskosität (*) aus verschiedenen Polyesterpartien.

Die Beispiele 2 bis 6 und 7 bis 9 sind mit jeweils identischen Rohstoffen durchgeführt worden.

Man erkennt eindeutig, dass beim jeweils ersten signifikanten Absinken der Schmelzviskosität, d.h. <90 % der maximalen Schmelzviskosität, in einer Produktionsserie ein Produkt erhalten wird, das in seinem Verarbeitungsverhalten zu einer Blasfolie deutlich verbessert ist. Dieses wird bei den beiden Serien aufgrund unterschiedlicher Rohstoffpartien mit verschiedenen Octanol-Mengen erreicht (Beispiel 4 bzw. 9).

Man erhält nach dem erfindungsgemäßen Verfahren eine im Extruder leicht fließende Schmelze, die zu einer standfesten und homogenen Folie verarbeitet werden kann. Außerdem ist die Thermostabilität erhöht.

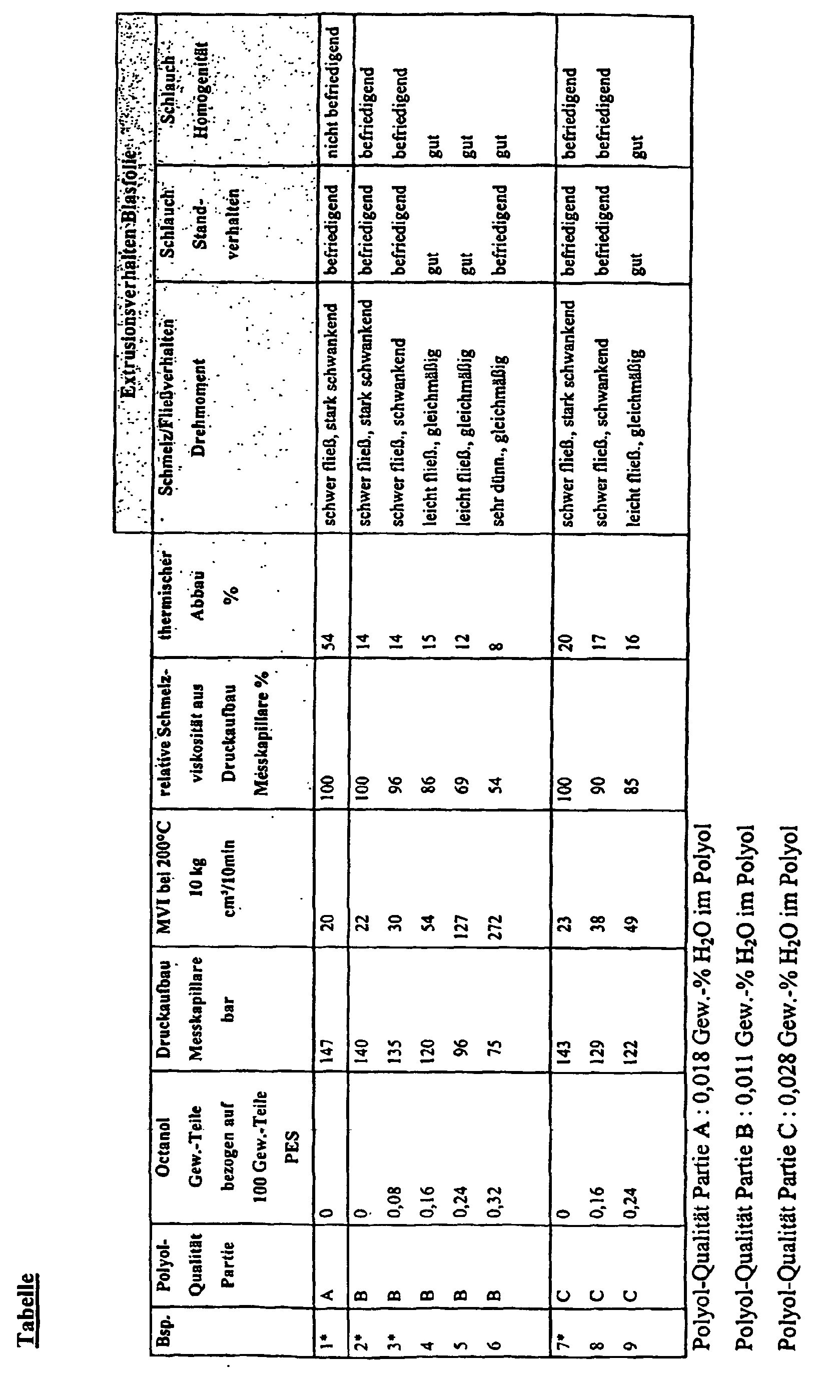

Die Beispiele wurden mit drei verschiedenen Polyester-Partien durchgeführt

| Beispiele | Polyol-Partie |
|---|---|
| 1 | A |
| 2-6 | B |
| 7-9 | C |

- rel. Schmelzviskosität =: Schmelzviskosität mit Octanol bezogen auf Vergleichsbeispiel aus identischen Rohstoffen (ohne Octanol)
- thermischer Abbau =: relat. Lösungsviskosität (0,4%ige N-Methylpyrrolidon-Lösung bezogen auf Lösungsmittel; Ubbelohde-Viskosimeter; 25°C) nach thermischer Behandlung im Kneter bei 200°C/15 min bezogen auf den Anfangswert

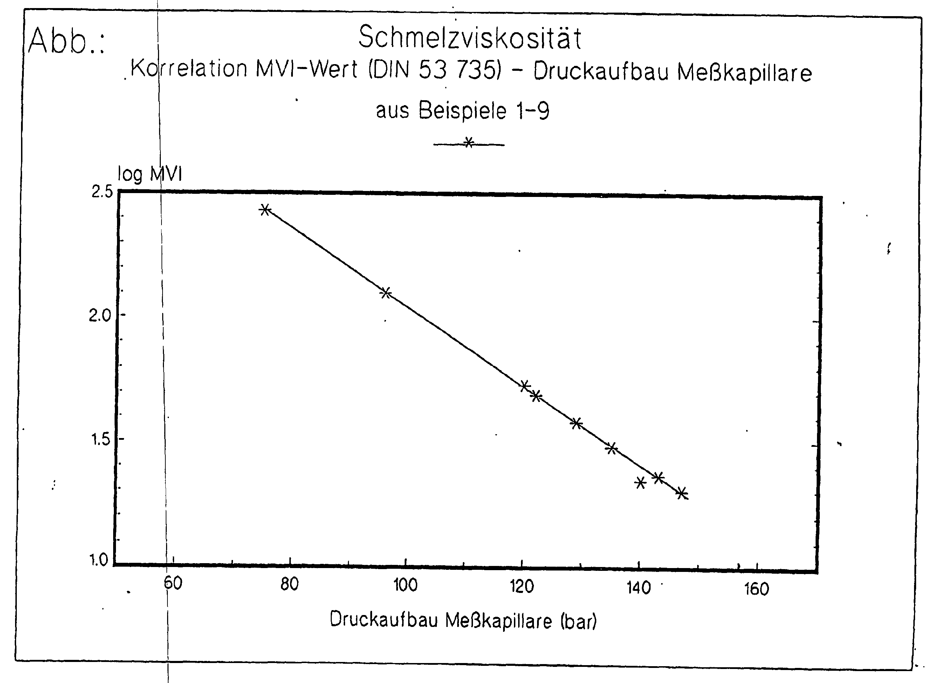

## Patentansprüche

1. Kontinuierliches Verfahren zur Herstellung von thermoplastisch verarbeitbaren Polyurethanelastomeren aus im wesentlichen linearen hydroxylterminierten Polyolen mit einem Molekulargewicht von 600 bis 5 000, organischen Diisocyanaten und Diol- und gegebenenfalls Triolkettenverlängerern mit einem Molekulargewicht von 62 bis 500 mit hoher Thermostabilität und mit möglichst konstantem Schmelz-Fließ-Verhalten, wobei insgesamt unter Hinzuziehung sämtlicher Reaktionskomponenten ein NCO-OH-Verhältnis von 0,9:1 bis 1,2:1 eingestellt wird, **dadurch gekennzeichnet, dass** in der Anfahrphase der kontinuierlichen Herstellung die benötigte Zugabemenge an organischen Diisocyanaten zur Einstellung der max. Viskosität der Schmelze des Polyurethanelastomeren ermittelt wird, danach die so ermittelte Zugabemenge der organischen Diisocyanate bei der kontinuierlichen Herstellung des Polyurethanelastomeren konstant zugegeben wird und durch zusätzliche und gleichzeitige Zugabe kleiner Mengen von 0,3 bis 6 Mol-%, bezogen auf den Kettenverlängerer, H-acider Verbindungen aus der Gruppe bestehend aus Monoalkoholen und primären und/oder sekundären Aminen die Viskosität der Schmelze des Polyurethanelastomeren auf einen konstanten Wert von <90 % der vorher ermittelten max. Viskosität eingestellt wird.

2. Kontinuierliches Verfahren zur Herstellung von thermoplastisch verarbeitbaren Polyurethanelastomeren gemäß Anspruch 1, **dadurch gekennzeichnet, dass** das oder die organischen Diisocyanate Dicyclohexylmethandiisocyanat, Hexamethylendiisocyanat, Isophorondiisocyanat, Naphthylendiisocyanat oder ein Diphenylmethandiisocyanat-Isomerengemisch mit einem 4,4'-Diphenylmethandiisocyanatgehalt von größer 96 Gew.-% oder 4,4'-Diphenylmethandiisocyanat, das oder die im wesentlichen linearen hydroxylterminierten Polyole Polyester, Polyether und Polycarbonate sind und der oder die Kettenverlängerer Ethylenglykol, Butandiol, Hexandiol, 1,4-Di-(betahydroxyethyl)-hydrochinon und gegebenenfalls Triol-Kettenverlängerer sind.

3. Kontinuierliches Verfahren gemäß einem oder mehreren der Ansprüche 1 bis 2, **dadurch gekennzeichnet, dass** bis zu 2 Gew.% weniger als die ermittelte Zugabenmenge an organischen Diisocyanaten konstant zugegeben wird.

4. Verfahren zur Herstellung von Extrusions-, Spritzguss-, Kalander- und Powder-slush-Artikeln umfassend die Herstellung von thermoplastisch verarbeitbaren Polyurethanelastomeren gemäß einem oder mehreren der Ansprüche 1 bis 3 und die Verarbeitung der Polyurethanelastomeren durch Extrusions-, Spritzguss-, Kalander- und Powder-slush-Verfahren.

## Claims

1. Continuous process for the production of thermoplastically processable polyurethane elastomers consisting of substantially linear hydroxyl-terminated polyols having a molecular weight of from 600 to 5000, organic diisocyanates, and diol and, optionally, triol chain-lengthening agents having a molecular weight of from 62 to 500, having high thermostability and having a melt flow behaviour that is as constant as possible, wherein there is established an overall NCO-OH ratio, adding all the reaction components, of from 0.9:1 to 1.2:1, which process is **characterised in that**, in the start-up phase of the continuous production, the required added amount of organic diisocyanates for establishing the maximum viscosity of the melt of the polyurethane elastomer is determined, the added amount of organic diisocyanates so determined is then added in a constant manner in the continuous production of the polyurethane elastomers and, by the additional and simultaneous addition of small amounts of from 0.3 to 6 mol.%, based on the chain-lengthening agents, of acid H compounds from the group consisting of monoalcohols and primary and/or secondary amines, the viscosity of the melt of the polyurethane elastomer is adjusted to a constant value of <90 % of the previously determined maximum viscosity.

2. Continuous process for the production of thermoplastically processable polyurethane elastomers according to claim 1, **characterised in that** the organic diisocyanate(s) is/are dicyclohexylmethane diisocyanate, hexamethylene diisocyanate, isophorone diisocyanate, naphthylene diisocyanate or a diphenylmethane diisocyanate isomeric mixture having a 4,4'-diphenylmethane diisocyanate content greater than 96 wt.%, or 4,4'-diphenylmethane diisocyanate, the substantially linear hydroxyl-terminated polyol(s) is/are polyesters, polyethers and polycarbonates, and the chain-lengthening agent(s) is/are ethylene glycol, butanediol, hexanediol, 1,4-di-(betahydroxyethyl)-hydroquinone and, optionally, triol chain-lengthening agents.

3. Continuous process according to one or more of claims 1 to 2, **characterised in that** up to 2 wt.% less than the determined added amount of organic diisocyanates is added in a constant manner.

4. Process for the production of extruded, injection-moulded, calendered and powder-slush articles, comprising the production of thermoplastically processable polyurethane elastomers according to one or more of claims 1 to 3, and the processing of the polyurethane elastomers by extrusion, injection-moulding, calendering and powder-slush processes.

## Revendications

1. Procédé continu pour la préparation d'élastomères de polyuréthannes aptes au travail thermoplastique à partir de polyols essentiellement linéaires à groupes terminaux hydroxy, à un poids moléculaire de 600 à 5000, de diisocyanates organiques et d'agents d'allongement des chaînes du type diol et le cas échéant triol, à un poids moléculaire de 62 à 500, ces élastomères ayant une haute stabilité à la chaleur et un comportement de fusion-écoulement aussi constant que possible, en réglant au total, tenu compte de tous les composants de réaction, à un rapport NCO/OH de 0,9:1 à 1,2:1, **caractérisé en ce que**, dans la phase initiale de la préparation continue, on détermine la quantité de diisocyanates organiques à ajouter pour régler à la viscosité maximale de la masse fondue d'élastomère de polyuréthanne, on maintient ensuite constante cette quantité de diisocyanates organiques à la préparation continue d'élastomères de polyuréthannes et par une addition complémentaire et simultanée de petites quantités de 0,3 à 6 mol %, par rapport à l'agent d'allongement des chaînes, de composés à H acide du groupe consistant en les monoalcools et les amines primaires et/ou secondaires, on règle la viscosité de la masse fondue d'élastomère de polyuréthanne à une valeur constante de < 90 % de la viscosité maximale déterminée au préalable.

2. Procédé continu pour la préparation d'élastomères de polyuréthanes aptes au travail thermoplastique selon la revendication 1, **caractérisé en ce que** le ou les diisocyanates organiques consistent en dicyclohexylméthanediisocyanate, hexaméthylènediisocyanate, isophoronediisocyanate, naphtylènediisocyanate ou en un mélange d'isomères du diphénylméthane à une teneur en 4,4'-diphénylméthanediisocyanate supérieure à 96 % en poids ou en 4,4'-diphénylméthanediisocyanate, le ou les polyols essentiellement linéaires à groupes terminaux hydroxy sont des polyesters, des polyéthers et des polycarbonates et le ou les agents d'allongement des chaînes consistent en l'éthylèneglycol, le butanediol, l'hexanediol, la 1,4-di-(bêtahydroxyéthyl)hydroquinone et le cas échéant des agents d'allongement des chaînes du type triol.

3. Procédé continu selon une ou plusieurs des revendications 1 à 2, **caractérisé en ce que** l'on ajoute en permanence le ou les diisocyanates organiques en quantité allant jusqu'à 2 % en poids en moins de la quantité déterminée au préalable.

4. Procédé pour la fabrication d'articles par extrusion, moulage par injection, calandrage et projection de poudre, comprenant la préparation d'élastomères de polyuréthannes aptes au travail thermoplastique selon une ou plusieurs des revendications 1 à 3 et le façonnage des élastomères de polyuréthannes par extrusion, moulage par injection, calandrage ou projection de poudre.
